Europäisches Patentamt

European Patent Office

Office européen des brevets

(19)

(11) Veröffentlichungsnummer: **0 225 438**
**B1**

(12) # EUROPÄISCHE PATENTSCHRIFT

(45) Veröffentlichungstag der Patentschrift:
09.08.89

(51) Int. Cl.⁴: **F 16 B 13/00, F 16 B 5/06**

(21) Anmeldenummer: **86112612.6**

(22) Anmeldetag: **12.09.86**

(54) **Blechdübel.**

(30) Priorität: **06.12.85 DE 8534355 U**

(43) Veröffentlichungstag der Anmeldung:
**16.06.87 Patentblatt 87/25**

(45) Bekanntmachung des Hinweises auf die Patenterteilung: **09.08.89 Patentblatt 89/32**

(84) Benannte Vertragsstaaten:
**AT BE CH DE FR GB IT LI LU NL SE**

(56) Entgegenhaltungen:
**CH–A– 559 860**
**DE–C– 2 833 801**

(73) Patentinhaber: **Gebhardt, Manfred**
**Cimbernweg 7**
**D-4773 Möhnesee 1 (DE)**

**Gebhardt, Margret**
**Blumenthaler Weg 4**
**D-4760 Werl (DE)**

(72) Erfinder: **Gebhardt, Manfred**
**Cimbernweg 7**
**D-4773 Möhnesee 1 (DE)**
Erfinder: **Gebhardt, Margret**
**Blumenthaler Weg 4**
**D-4760 Werl (DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1 (DE)**

EP 0 225 438 B1

## Beschreibung

Die Erfindung richtet sich auf einen Blechdübel mit einem zweischenkligen, geschlitzten Schaft und einem Kopf zur Befestigung zweier etwa senkrecht zueinander angeordneter Bleche aneinander, wobei der Schaft eine Bohrung in dem einen Blech durchdringt und über eine Stirnseite des anderen Bleches mit einem Schlitz greift und sich an diesem Blech verkeilt, wobei der Blechdübel aus einem Blechzuschnitt gefalzt ist und die beiden Schaftschenkel dicht aneinander liegen.

Ein derartiger Blechdübel wird mit der Metallwarenfabrik Franz Pauli in Ense-Parsit seit längerem gefertigt. Der Dübel ist aus einem Blechstreifen gefalzt, wobei vor oder nach dem Falzen in die beider freien Enden des Blechstreifens ein spiegelsymmetrischer, im wesentlichen V-förmiger Schlitz eingeprägt worden ist, der hinter der engsten Stelle in einer Ausbuchtung endet, so daß sich etwa im oberen Schlitzdrittel nach innen weisende Spitzen bilden. In der Gebrauchslage greifen diese Spitzen in die zu befestigenden Bleche ein und führen dort zu einer geringfügigen Verquetschung bzw. Verklemmung.

Ein von Grund auf ähnlicher, allerdings in der Schlitzgestaltung anders konzipierter Blechdübel ist aus der DE-C 28 33 801 bekannt. Das Wesen dieses Blechdübels besteht u.a. darin, daß die Schenkel des Dübelschaftes nicht, wie beim Stand gattungsbildender Technik unmittelbar aneinanderliegend, sondern einen parallelen deutlichen Abstand aufweisend ausgebildet sind. Der Schlitz in jedem freien Ende der Schenkel bei diesem Dübel ist so gestaltet, daß im Schlitzfuß Abkröpfungen vorgesehen sind, die gegeneinander gewinkelt sind, um nicht nur ein Verquetschen, sondern eine gewisse Art der Verschränkung des eingeschobenen stirnseitigen Blechbereiches zu erreichen.

Der Dübel nach DE-C 28 33 801 hat einen wesentlichen Fertigungsnachteil, der darin besteht, daß die Schlitzung in den freien Enden des Blechzuschnittes vor der Falzung zum Dübel zwingend eingebracht werden muß, was beim gattungsbildenden Dübel nicht der Fall ist. Allerdings dürfte der Vorteil des Dübels nach DE-C 28 33 801 durch die gegeneinander gerichteten Fußverläufe im Schlitz eine größere Haltekraft gegenüber dem Dübel nach dem gattungsbildenden Stand der Technik bedeuten.

Aufgabe der Erfindung ist die Schaffung einer Lösung, mit der ein einfaches Herstellen des Dübels möglich ist bei gleichzeitiger Aufbringung einer sehr großen Haltekraft.

Diese Aufgabe wird bei einem Blechdübel der eingangs bezeichneten Art gemäß der Erfindung dadurch gelöst, daß der Schlitz in der Seitenansicht einen Verlauf mit drei Abschnitten mit wenigstens einer Umlenkung im mittleren Abschnitt aufweist, wobei von Abschnitt zu Abschnitt ein Richtungswechsel stattfindet und wobei der mittlere Abschnitt von einem gerundeten, bogenförmigen Verlauf wenigstens der einen Schlitzwand gebildet und der Verlauf dieser Schlitzwand im ersten und dritten Abschnitt parallel zur Eintreibrichtung ausgerichtet ist.

Mit der Erfindung wird erreicht, daß zum einen die Schlitzung nach Falzung oder auch vor Falzung des Dübels eingebracht werden kann. Gleichzeitig erreicht der Verlauf des Schlitzes, daß nach Aufschlagen des Dübels auf die Stirnseite einer Blechwand diese dort verquetscht wird, womit eine sehr große Haltekraft verbunden ist. Gleichzeitig wird erreicht, daß sich der Dübel beim Einschlagen relativ zu den zu verbindenden Blechteilen nicht verdreht.

In Ausgestaltung sieht die Erfindung vor, daß im Einlaufbereich der dem parallel ausgerichteten Schlitzwandabschnitt gegenüberliegende Schlitzbandabschnitt einen Keilwinkel von größer als 15° bildet und/order, daß sich an der keilförmig angestellten Schlitzwandabschnitt ein bogenförmiger Schlitzwandabschnitt über etwa einen Viertelkreis anschließt und nachfolgend in einen Schlitzbandabschnitt übergeht, der in einen Winkel relativ zur Einschlagrichtung zum Schlitzfuß verläuft. Er kann derart gestaltet sein, daß der Schlitz am Übergang zum Viertelbogen innerhalb des Viertelbogens und im Schlitzfuß die gleiche Weite aufweist.

In einer abgewandelten Ausführung sieht die Erfindung vor, daß die gegenüberliegenden Randbegrenzungen des Schlitzes in Richtung des Kopfes gesehen in allen drei Schlitzabschnitten im spitzen Winkel zueinander verlaufen, was zu einem nicht allzugroßen Widerstand in Anschlagrichtung des Dübels führt, allerdings in Gegenrichtung zu einer ausreichenden Verquetschung und damit Aufbringung der Haltekraft.

Die Erfindung kann darüber hinaus so gestaltet sein, daß sich an die keilförmig angestellte Außenkontur des Schlitzes im ersten Abschnitt durch Rückkröpfung parallel zur Kopfebene eine Klemmspitze anschließt und der weitere Randverlauf des mittleren Schlitzabschnittes auf dieser Seite parallel zur Eintreibrichtung des Dübels verläuft, wobei die Erfindung auch vorsieht, daß der erste parallel zur Eintreibrichtung verlaufende Randbereich des Schlitzes unter Bildung einer nach innen gerichteten spitzen Ecke in einen schrägen Wandverlauf des mittleren Schlitzabschnittes übergeht, der einen Keilwinkel zur gegenüberliegenden parallelen zur Einschlagrichtung verlaufenden Wand aufweist, der größer gleich 15° ist.

Bilden die beiden ersten Teile in Eintreibrichtung gesehen des Schlitzes noch vergleichsweise geringe Umlenkungen, so sieht die Erfindung in weiterer Ausgestaltung für den dritten Bereich vor, daß der eingestellte Randverlauf des mittleren Schlitzabschnittes unter Bildung einer Spitze parallel zur Kopfebene zurückverlaufend ausgebildet ist und in einem Winkel größer 45° in einem Endbogen des Schlitzes weiterverläuft, wobei der parallel zur Einschlagrichtung verlaufende gegenüberliegende Randbereich in einer Krümmung in einem Randverlauf des dritten Abschnittes übergeht, der in einem Winkel von kleiner 50° ausgerichtet ist und ebenfalls im Endbogen des Schlitzes endet.

Nachstehend ist die Erfindung anhand der Zeichnungen beispielsweise näher erläutert. Dargestellt sind in

Fig. 1 eine Seitenansicht des Dübels mit Schlitzfläche,

Fig. 2 die Stirnfläche des Dübels

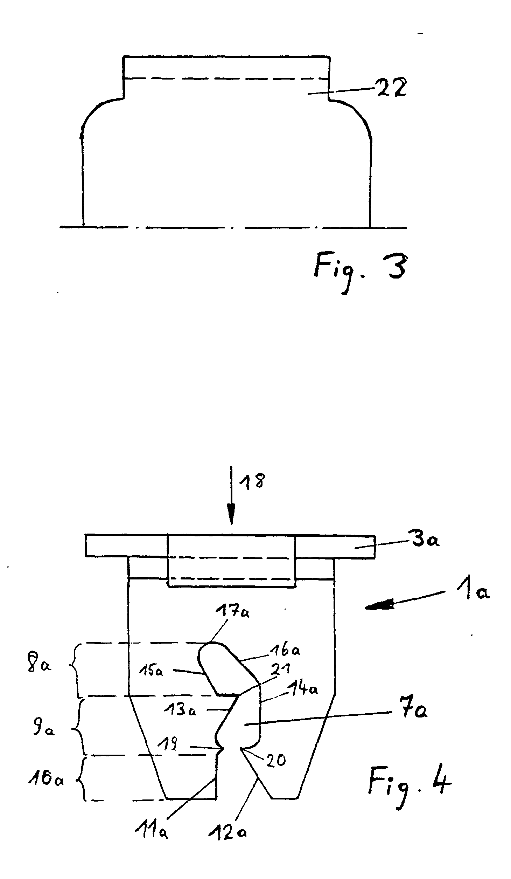

Fig. 3 eine Aufsicht auf den Dübelkopf (halb geschnitten)

Fig. 4 eine Seitenansicht des Dübels mit veränderter Schlitzfläche.

Der allgemein mit 1 bzw. la bezeichnete Blechdübel besteht aus einem Blechzuschnitt 2, der so gefalzt ist, daß sich ein Kopfbereich 3 bzw. 3a und ein Schaftbereich 4 bildet, wobei der Schaft doppellagig ausgebildet ist, nämlich die beiden Schenkel 5 und 6 aufweist. Wesentlich für die Erfindung ist die Ausbildung eines Schlitzes 7 bzw. 7a in den Schenkeln 5 und 6 bzw. der Verlauf dieses Schlitzes.

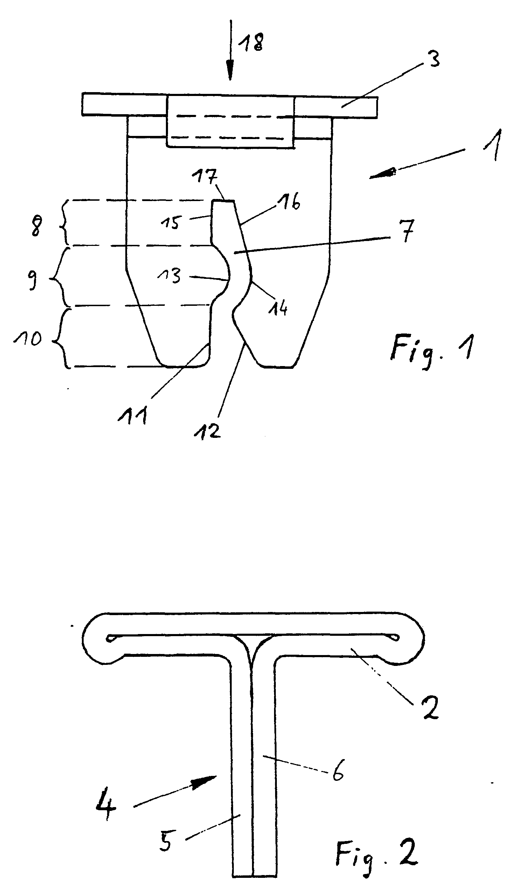

Der Schlitz ist, wie sich auf Fig. 1 und Fig. 4 ergibt, im wesentlichen S-förmig und bildet drei Abschnitte, die in Fig. 1 von oben nach unten mit 8, 9 und 10 und in Fig. 4 mit 8a, 9a und 10a bezeichnet sind.

Zur leichteren Beschreibung sind die jeweils gegenüberliegenden Randbereiche der Abschnitte 8 bis 10 bzw. 8a bis 10a des Schlitzes 7 und 7a mit eigenen Bezugsziffern versehen. So weist der Schlitzabschnitt 8 die Randbereiche 15 und 16, der Schlitzabschnitt 9 die Randbereiche 13 und 14 und der Schlitzabschnitt 10 die Randbereiche 11 und 12 auf. Das Kopfende des Schlitzes 7 wird durch die Kante 17 gebildet. In Fig. 4 sind die Bezeichnungen analog ausgelegt. Zum Schlitzbereich 8a gehören die Kanten 15a und 16a, zum Schlitzbereich 9a die Kanten 13a und 14a, zum Schlitzbereich 10a die Kanten 11a und 12a.

Das Kopfende des Schlitzes 7a wird durch den Radius 17a gebildet.

Das Wesen der Erfindung besteht in Fig. 1 darin, daß die Randbereiche als Radien und Tangenten gebildet werden. So setzt sich die linke Seite des Schlitzes aus den Kanten 11, 13 und 15 und die rechte Seite aus den Kanten 12, 14 und 16 zusammen, welche jeweils durch Radien ineinander übergehen. Verlängert man die Kanten 11 und 12 und die Kanten 15 und 16 paarweise, so schneiden sie sich in einem spitzen Winkel, welcher dabei gegen die mit 18 in Fig. 1 bezeichnete Einschlagrichtung des Dübels gerichtet ist. Die Randbereiche 11 und 15 sind jeweils parallel zur Einschlagrichtung 18 angeordnet.

Bei Fig. 4 sind die beiden schräg gegenüberliegenden Kanten 11a und 14a parallel zur Einschlagrichtung 18. Die Übergänge zwischen den Randbereichen 8a, 9a und 10a sind als scharfe Kanten und nicht als Radien, wie in Fig. 1, ausgelegt. So werden die Spitzen 19, 20 und 21 gebildet, welche in den Schlitz hineinragen und ein eingeschlagenes Blech am Herausziehen hindern. Verlängert man die Kanten 11a und 12a, 13a und 14a, 15a und 16a paarweise, so schneiden sie sich in einem spitzen Winkel, welcher gegen die Einschlagrichtung 18 gerichtet ist.

## Patentansprüche

1. Blechdübel mit einem zweischenkligen, geschlitzten Schaft und einem Kopf zum Befestigen zweier etwa senkrecht zueinander angeordneter Bleche aneinander, wobei der Schaft eine Bohrung in dem einen Blech durchdringt und über eine Stirnseite des anderen Bleches mit seinem Schlitz greift und sich an diesem Blech verkeilt, wobei der Blechdübel aus einem Blechzuschnitt gefalzt ist und die beiden Schaftschenkel dicht aneinander liegen, dadurch gekennzeichnet, daß der Schlitz (7) in der Seitenansicht einen Verlauf mit drei Abschnitten (8-10) mit wenigstens einer Umlenkung im mittleren Abschnitt (9) aufweist, wobei von Abschnitt zu Abschnitt ein Richtungswechsel stattfindet und wobei der mittlere Abschnitt (9) von einem gerundeten, bogenförmigen Verlauf (13) wenigstens der einen Schlitzwand gebildet und der Verlauf dieser Schlitzwand im ersten und dritten Abschnitt (10 bzw. 8) parallel zur Eintreibrichtung (18) ausberichtet ist.

2. Blechdübel nach Anspruch 1, dadurch gekennzeichnet, daß im Einlaufbereich der dem parallel ausgerichteten Schlitzwandabschnitt (11) gegenüberliegende Schlitzwandabschnitt (12) einen Keilwinkel von größer/gleich 15° bildet.

3. Blechdübel nach Anspruch 2, dadurch gekennzeichnet, daß sich an den keilförmig angestellten Schlitzwandabschnitt (12) ein bogenförmiger Schlitzwandabschnitt (14) über etwa einen Viertelkreis anschließt und nachfolgend in einen Schlitzwandabschnitt (16) übergeht, der in einen Winkel relativ zur Eintreibrichtung zum Schlitzfuß verläuft.

4. Blechdübel nach Anspruch 3, dadurch gekennzeichnet, daß der Schlitz (7) am Übergang zum Viertelbogen, innerhalb des Viertelbogens und im Schlitzfuß die gleiche Weite aufweist.

5. Blechdübel mit einem zweischenkligen, geschlitzten Schaft und einem Kopf zum Befestigen zweier etwa senkrecht zueinander angeordneter Bleche aneinander, wobei der Schaft eine Bohrung dem einen Blech durchdringt und über eine Stirnseite des anderen Bleches mit seinem Schlitz greift und sich an diesem Blech verkeilt, wobei der Blachdübel aus einem Blechzuschnitt gefalzt ist und die beiden Schaftschenkel dicht aneinander liegen, dadurch gekennzeichnet, daß der Schlitz (7a) in der Seitenansicht einen Verlauf mit drei Abschnitten (8a-10a) aufweist wobei von Abschnitt zu Abschnitt ein Richtungswechsel stattfindet und daß die gegenüberliegenden Randbegrenzungen (11a, 12a ; 13a, 14a ; 15a, 16a) des Schlitzes (7a), in Richtung des Kopfes (3a) gesehen, in allen drei Schlitzabschnitten (8a-10a) im spitzen Winkel zueinander verlaufen.

6. Blechdübel nach Anspruch 5, dadurch gekennzeichnet, daß im Einlaufbereich ein Schlitz-

abschnitt (11a) parallel zur Eintreibrichtung ausgerichtet ist und der gegenüberliegende Schlitzabschnitt (12a) dazu einen Keilwinkel von größer/gleich 15° bildet.

7. Blechdübel nach Anspruch 5 oder 6, dadurch gekennzeichnet, daß der erste parallel zur Eintreibrichtung (18) verlaufende Wandbereich (11a) unter Bildung einer nach innen gerichteten spitzen Ecke (19) in einen bezüglich der Längserstreckung des Blechdübels, schrägen Wandverlauf (13a) des mittleren Schlitzabschnittes (9a) übergeht, der einen Keilwinkel zur gegenüberliegenden parallel zur Einschlagrichtung verlaufenden Wand aufweist, der größer/gleich 15° ist.

8. Blechdübel nach Anspruch 7, dadurch gekennzeichnet, daß der Schräge Wandbereich (13a) des mittleren Schlitzabschnittes (9a) unter Bildung einer Spitze (21) parallel zur Kopfebene zurückverlaufend ausgebildet ist und in einem Winkel größer 45° in einen Endbogen (17a) des Schlitzes (7a) weiterverläuft, wobei der parallel zur Einschlagrichtung (18) verlaufende gegenüberliegende Randbereich in einer Krümmung in einen Wandverlauf (16a) des dritten Schlitzabschnittes (8a) übergeht, der in einem Winkel von kleiner 50° ausgerichtet ist und ebenfalls im Endbogen (17a) des Schlitzes (7a) endet.

**Claims**

1. A sheet metal fixing pin comprising a twin-leg slotted shank and a head for fixing together two sheet metal portions which are disposed substantially perpendicularly to each other, wherein the shank passes through a bore in the one sheet metal portion and engages with its slot over one end of the other sheet metal portion and is fastened by a wedging action to said sheet metal portion, wherein the sheet metal fixing pin is folded from a sheet metal blank and the two legs of the shank bear closely against each other, characterised in that the slot (7) in side view is of a configuration comprising three portions (8-10) with at least one change in direction in the middle portion (9), wherein there is a change in direction from one portion to another and wherein the middle portion (9) is formed by a rounded, arcuate configuration (13) of at least the one wall of the slot and the configuration of said wall of the slot is oriented parallel to the driving-in direction (18) in the first and third portions (10 and 8 respectively).

2. A sheet metal fixing pin according to claim 1 characterized in that in the entry region the portion (12) of the wall of the slot which is in opposite relationship to the portion (11) of the wall of the slot which is of parallel orientation forms a wedge angle of larger/equal to 15°.

3. A sheet metal fixing pin according to claim 2 characterized in that an arcuate portion (14) of the wall of the slot, extending over approximately a quarter of a circle, adjoins the portion (12) of the wall of the slot which is set in a wedge-like configuration, and then goes into a wall portion (16) which extends at an angle relative to the driving-in direction, to the base of the slot.

4. A sheet metal fixing pin according to claim 3 characterized in that the slot (7) is of the same width at the transition to the quarter-arc portion, within the quarter-arc portion and at the base of the slot.

5. A sheet metal fixing pin comprising a twin-leg slotted shank and a head for fixing together two sheet metal portions which are disposed substantially perpendicularly to each other, wherein the shank passes through a bore in the one sheet metal portion and engages with its slot over one end of the other sheet metal portion and is fastened by a wedging action to said sheet metal portion, wherein the sheet metal fixing pin is folded from a sheet metal blank and the two legs of the shank bear closely against each other, characterised in that the slot (7a) in side view is of a configuration comprising three portions (8a-10a), wherein there is a change in direction from one portion to another, and that the oppositely disposed edge boundaries (11a, 12a ; 13a, 14a ; 15a, 16a) of the slot (7a), as seen in the direction of the head (3a), extend at an acute angle relative to each other in all three portions (8a-10a) of the slot.

6. A sheet metal fixing pin according to claim 5 characterised in that in the entry region a portion (11a) of the slot is oriented parallel to the driving-in direction and the oppositely disposed portion (12a) of the slot forms a wedge angle of greater than/equal to 15° in relation thereto.

7. A sheet metal fixing pin according to claim 5 or claim 6 characterised in that the first wall region (11a) which extends parallel to the dirving-in direction (18) goes into a wall configuration (13a) of the middle portion (9a) of the slot, thereby forming an inwardly directed pointed corner (19), said wall configuration (13a) being inclined with respect to the longitudinal extent of the sheet metal fixing pin and the middle portion (9a) of the slot having a wedge angle which is greater than/equal to 15° with respect to the oppositely disposed wall which extends parallel to the driving-in direction.

8. A sheet metal fixing pin according to claim 7 characterised in that the inclined wall region (13a) of the middle portion (9a) of the slot is arranged to extend back parallel to the plane of the head, forming a point (21), and continues at an angle of greater than 45° into a terminal arcuate portion (17a) of the slot (7a), wherein the oppositely disposed edge region which extends parallel to the driving-in direction (18) blends in a curve into a wall configuration (16a) of the third portion (8a) of the slot, which is oriented at angle of less than 50° and which also terminates in the terminal arcuate portion (17a) of the slot (7a).

**Revendications**

1. Cheville en tôle comprenant un fût fendu à deux branches, ainsi qu'une tête destinée à l'assujettissement mutuel de deux tôles disposées à peu près perpendiculairement l'une à l'autre, le fût traversant un perçage ménagé dans l'une des tôles, venant coiffer par sa fente une face extrême de l'autre tôle et se coinçant sur cette tôle, la cheville en tôle étant repliée à partir d'une pièce découpée en tôle, et les deux branches du fût étant étroitement appliquées l'une contre l'autre, caractérisée par le fait que la fente (7) possède, en élévation latérale, une configuration comprenant trois régions (8-10) et présentant au moins une déviation dans la région centrale (9), un changement de direction s'opérant d'une région à l'autre, la région centrale (9) étant formée par une configuration curviligne arrondie (13) d'au moins l'une des parois de la fente, et la configuration de cette paroi de la fente étant orientée parallèlement à la direction d'enfoncement (18) dans les première et troisième régions (10, respectivement 8).

2. Cheville en tôle selon la revendication 1, caractérisée par le fait que la zone (12) de la paroi de la fente qui est opposée à la zone (11) de la paroi de la fente orientée parallèlement forme, dans la région de pénétration, un angle de conicité supérieur/égal à 15°.

3. Cheville en tôle selon la revendication 2, caractérisée par le fait que la zone (12) de la paroi de la fente qui présente une allure cunéiforme se prolonge, sur environ un quart de cercle, par une zone curviligne (14) de cette paroi de la fente fusionnant, ensuite, dans une zone (16) de la paroi de la fente qui décrit un angle avec le fond de cette fente par rapport à la direction d'enfoncement.

4. Cheville en tôle selon la revendication 3, caractérisée par le fait que la fente (7) présente la même largeur à la transition avec le quart de cercle, à l'intérieur de ce quart de cercle et au fond de la fente.

5. Cheville en tôle comprenant un fût fendu à deux branches, ainsi qu'une tête destinée à l'assujettissement mutuel de deux tôles disposées à peu près perpendiculairement l'une à l'autre, le fût traversant un perçage ménagé dans l'une des tôles, venant coiffer par sa fente une face extrême de l'autre tôle et se coinçant sur cette tôle, la cheville en tôle étant repliée à partir d'une pièce découpée en tôle, et les deux branches du fût étant étroitement appliquées l'une contre l'autre, caractérisée par le fait que la fente (7a) possède, en élévation latérale, une configuration comprenant trois régions (8a-10a), un changement de direction s'opérant d'une région à l'autre ; et par le fait que les délimitations marginales opposées (11a, 12a ; 13a, 14a ; 15a, 16a) de la fente (7a) s'étendent, observées en direction de la tête (3a), à angle aigu les unes par rapport aux autres dans l'intégralité des trois régions (8a-10a) de ladite fente.

6. Cheville en tôle selon la revendication 5, caractérisée par le fait qu'une zone (11a) de la fente est orientée parallèlement à la direction d'enfoncement dans la région de pénétration, et la zone opposée (12a) de la fente décrit, par rapport à la zone précitée, un angle de conicité supérieur/égal à 15°.

7. Cheville en tôle selon la revendication 5 ou 6, caractérisée par le fait que la première zone de paroi (11a) qui s'étend parallèlement à la direction d'enfoncement (18) fusionne, en formant un coin pointu (19) dirigé vers l'intérieur, dans une configuration de paroi (13a) de la région centrale (9a) de la fente qui est inclinée par rapport à l'étendue longitudinale de la cheville en tôle et qui décrit, vis-à-vis de la paroi opposée s'étendant parallèlement à la direction d'enfoncement par percussion, un angle de conicité supérieur/égal à 15°.

8. Cheville en tôle selon la revendication 7, caractérisée par le fait que la zone de paroi inclinée (13a) de la région centrale (9a) de la fente est réalisée en retrait avec formation d'une pointe (21) parallèlement au plan de la tête, puis se prolonge par un arc extrême (17a) de la fente (7a), selon un angle supérieur à 45°, la zone marginale opposée, s'étendant parallèlement à la direction (18) d'enfoncement par percussion, fusionnant alors, par une courbure, dans une configuration de paroi (16a) de la troisième région (8a) de la fente qui est orientée selon un angle inférieur à 50° et s'achève, elle aussi, dans l'arc extrême (17a) de la fente (7a).

Fig. 1

Fig. 2

Fig. 3

Fig. 4